# EUROPEAN PATENT SPECIFICATION

(11) **EP 3 499 474 B1**
(45) Date of publication and mention of the grant of the patent: **10.03.2021**
(21) Application number: 18208228.9
(22) Date of filing: 26.11.2018
(51) Int. Cl.: G08B 17/06, A62C 3/02, A62C 3/08, A62C 8/06

(54) **A FIRE SENSOR, APPARATUS AND SYSTEM**
BRANDSENSOR, VORRICHTUNG UND SYSTEM
DÉTECTEUR D'INCENDIE, APPAREIL ET SYSTÈME

(30) Priority: 12.12.2017 IN 201741044614
(43) Date of publication of application: 19.06.2019
(73) Proprietor: Airbus SAS, Bristol, BS34 7PA (GB)
(72) Inventor: Hatti, Prakash, Bristol, BS34 7PA (GB); Selvan, Arumugam, Bristol, BS34 7PA (GB)
(74) Representative: Claydon, Michelle Leonie

(56) References cited:
- WO-A1-2016/092293
- CN-U- 202 013 625
- US-A1- 2005 089 081
- US-B2- 7 810 577
- JOHN BALLATO ET AL: "Glass and Process Development for the Next Generation of Optical Fibers: A Review", FIBERS, vol. 5, no. 1, 10 March 2017 (2017-03-10), page 11, XP055584739, DOI: 10.3390/fib5010011

## Description

### FIELD OF THE INVENTION

The present invention relates to a fire sensor, apparatus and system adapted to deter the spread of fire.

### BACKGROUND TO THE INVENTION

It is known to provide a fire resistant material such as a fire resistant blanket to deter the spread of fire in an environment. It is also known to provide fire seals to prevent the spread of fire from a fire zone on a vehicle or in other environments. On aircraft, in particular, various fire zones are difficult to monitor for fire, critical to prevent the spread of fire or both.

An example of an area which has been found susceptible to fires and where it is both difficult and expensive to monitor for fire is the cabin attic area of an aircraft. The area is hidden from view and thermal insulation blankets/films can burn undetected until a large area is damaged or until the burning area falls within the detection range of fire/smoke detectors.

US7810577 discloses an array of temperature sensors, each associated with a different area of the aircraft. CN 202013625 discloses a fire sensor having electrically conductive wires that short circuit and trigger an alarm when exposed to elevated temperatures. However, fire and smoke detectors and the complex network of wiring harness required for these add considerable unwanted weight and complexity to the aircraft. US2005/08908 discloses a fire sensor comprising fibre optic cables. Respective LEDs input light signals to the cables and processors analyse the reflected signal to determine the location of the fire. Such an arrangement requires a lot of processing to accurately determine the location of a fire and to detect propagation of the fire.

Examples of areas on the aircraft where it is critical to prevent the spread of fire are engines, pylon ribs with fuel lines, pylon to engine interfaces and pylon to wing interfaces. In such areas, fire seals are used to prevent the spread of fire.

It is an object of the invention to provide a fire sensor which will reduce the difficulties associated with the prior art.

### SUMMARY OF THE INVENTION

According to a first aspect of the invention, there is provided a fire sensor comprising a layer of fibres, said fibres having an electromagnetic property changeable upon contact with fire and being individually connectible to detection means to detect any said change in electromagnetic property, said fibres being arranged to cross one another at intersections, whereby a said change in electromagnetic property detected at each of two intersecting fibres is indicative of a fire at the location of the intersection of said two fibres.

The at least one fibre may comprise a non-conductive core material which is preferably doped in a conducting agent. The conducting agent may comprise a nano material which may comprise a graphene-based doping agent. The graphene-based doping agent may comprise graphene oxide.

The core material is preferably non-flammable and may conveniently comprise a glass fibre or a polyvinyl fluoride fibre.

A said changeable electromagnetic property may conveniently comprise one of the group: electrical resistance and surface magnetism but may comprise any suitable electromagnetic property.

The fire sensor may include a substrate to which the at least one fibre is attached.

For any desired environment but for aircraft and other vehicles in particular, the substrate may comprise a thermal insulation blanket or a fire seal.

The fire seal may comprise elastomeric material including a layer of fire resistant reinforcement. Additionally, friction combatting lubricant may be added to promote easy sliding of the seal.

According to a second aspect of the invention, there is provided fire sensing apparatus including a fire sensor according to the first aspect and detection means, said detection means including transmission means to send a test signal to a first end of the at least one fibre of the fire sensor, receiving means to receive the test signal from a second end of the at least one fibre and analysing means to analyse the received signal and thereby detect any change in electromagnetic property of said at least one fibre.

The analyzing means may be adapted to detect any change in electromagnetic property of said at least one fibre by comparing a said received test signal with a stored test signal corresponding to an unburnt fibre and then indicating a fire if said test signal varies from said stored signal in a predetermined manner.

The apparatus may include display means to display the location of a detected fire for an observer.

According to a third aspect of the invention, there is provided an aircraft fire alarm system including fire sensing apparatus according to the second aspect and an alarm. The fire alarm system may include a fire control system including fire extinguishing means.

According to a fourth aspect of the invention, there is provided an aircraft including fire sensing apparatus according to the second aspect or a fire alarm system according to the third aspect.

### BRIEF DESCRIPTION OF THE DRAWINGS

The invention will now be described, by way of example only, with reference to the following drawings in which:-
Figure 1 is a schematic representation of a fire sensor according to the invention in the form of a thermal insulation blanket;
Figures 2(a) and 2(b) are a schematic representations of a fire sensor according to the invention in the form of two configurations of fire seal;
Figures 3a, 3b and 3c show an aircraft engine splitter seal in position;
Figure 4 is a graph showing normalized change in electrical resistance against fabric length or width for a fire sensor according to the invention;
Figure 5 shows schematically a fire sensing system according to the invention in use for active fire control;
Figure 6 shows schematically the fire sensing system of Figure 5 with a decision tree used by the controller shown in Figure 5;
Figure 7 shows, schematically, sensor connections on a microchip used to indicate flame position on the fire sensor, and
Figure 8 shows schematically orthogonal fibres of a fire sensor according to the invention.

### DETAILED DESCRIPTION OF THE INVENTION

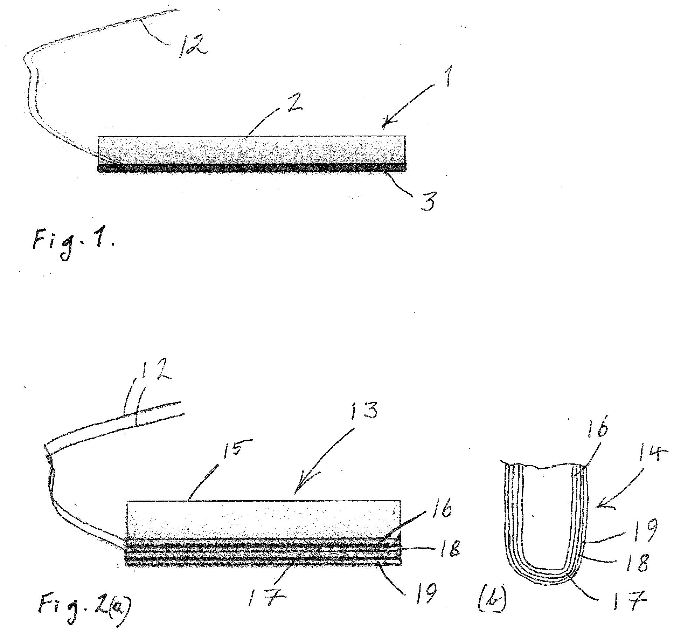

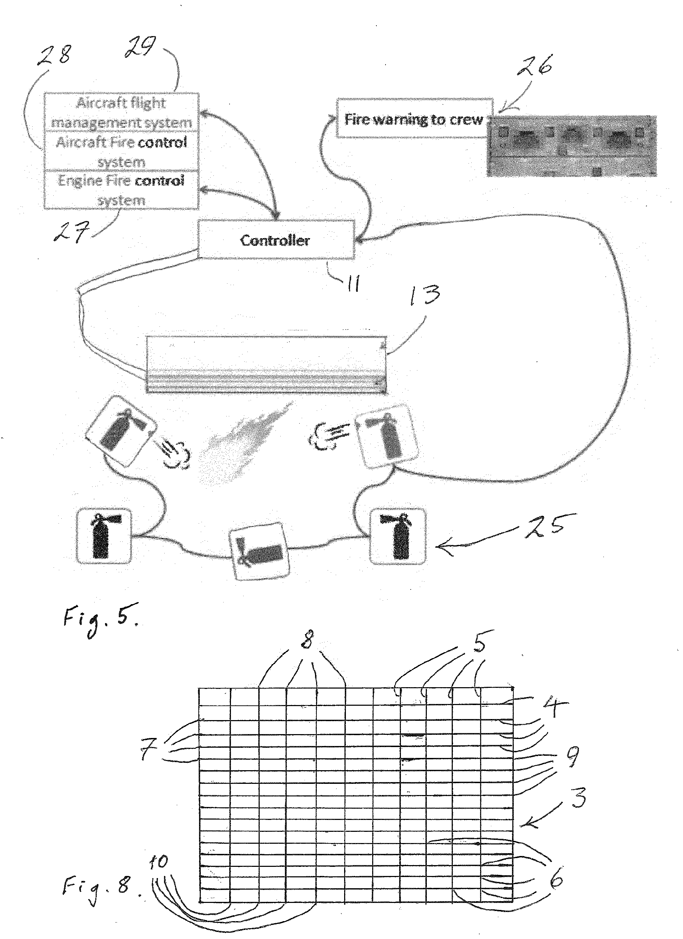

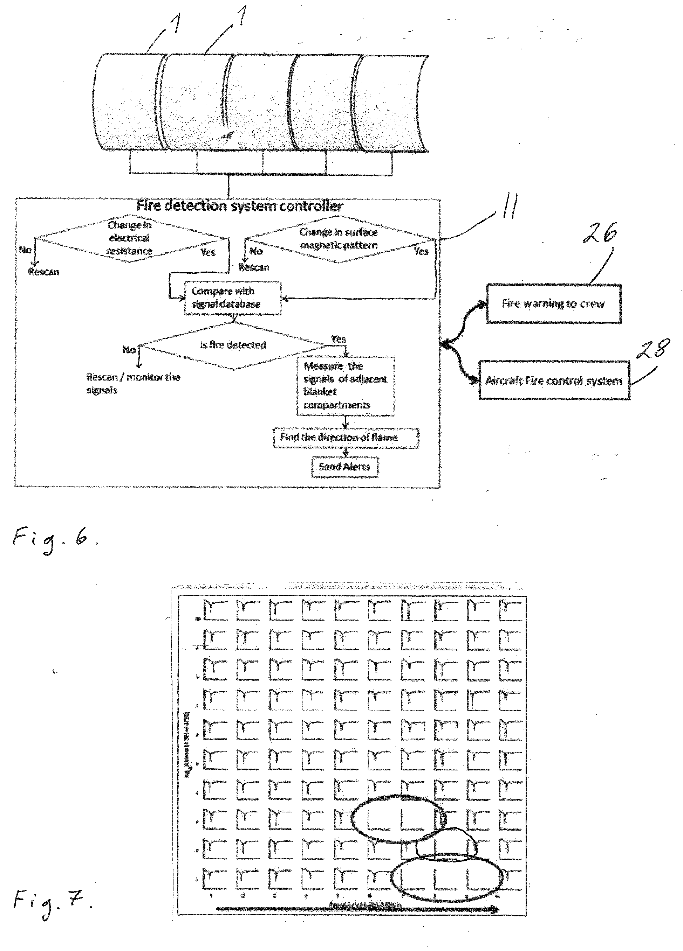

Figures 1 and 8 show a fire sensor according to the invention in the form of a thermal insulation blanket 1. The blanket 1 comprises a conventional layer 2 of glass fibre matting and a fire detection layer 3 according to the invention of graphene oxide doped glass fibres 4, 5 passing in orthogonal directions. The fibres 4, 5 have intersections 6 which are used to pinpoint locations of any fire detected on the sensor. It should be understood that the intersections 6 allow no electrical contact between fibres 4, 5 but merely represent positions on the sensor at which fire is deemed to exist if the two fibres 4, 5 form an intersection there. Connections are made from fibre ends 7, 8, 9, 10 to separate detection means incorporated into a controller 11 (see Figs. 5 and 6). From the fire detection layer 3 extend nominal connections 12 to the controller 11. Such connections 12 will, in practice, include connections from all fibres 4, 5 in the fire detection layer 3.

On an aircraft, in practice, such fire sensors on thermal insulation blankets will be deployed in a cabin attic area and will thus provide a fire retardant effect via the blanket and fire warning via the fire sensor which is co-extensive with the blanket.

Referring to Figures 2(a) and 2(b), there are shown, in section, two versions of a fire seal 13, 14, according to the invention. Fire seal 13 is a flat sheet in form and comprises a layer 15 of elastomeric material, here it is silicone rubber filled with high temperature stabilizing additives, two conventional layers 16, 17 of fire resistant reinforcement, for example, meta aramid, and two fire detection layers 18, 19 according to the invention. The fire detection layers 18, 19 comprise graphene oxide doped glass fabric, the glass being non-conductive by nature, and the outer fire detection layer 19 is treated with siloxane oil to reduce surface friction and may include intumescent particles (not shown here) to act as a first layer of fire containment. The graphene oxide has been chemically treated to improve its flame retardant properties.

In this example, the chemical treatment includes the addition of intumescent materials and foaming materials to the layer 19. Such treatment is carried out by techniques such as critical drying and chemical ageing.

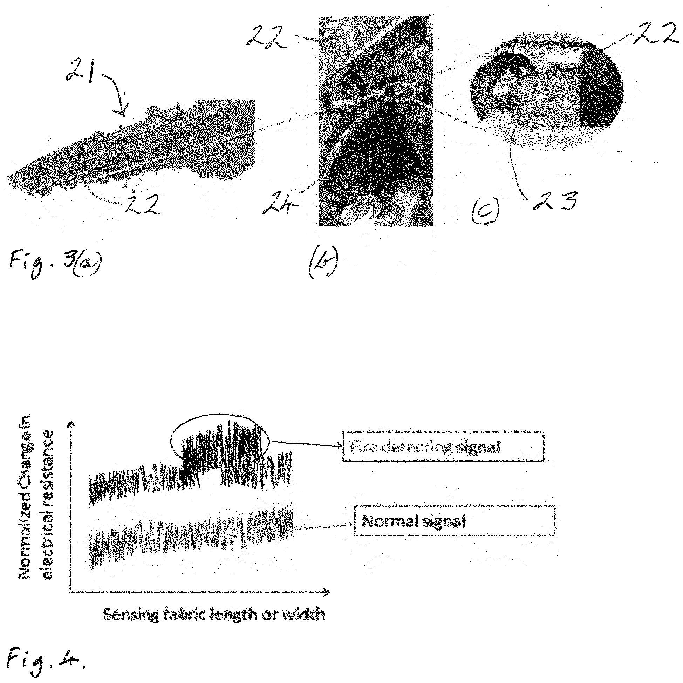

Figure 2(b) shows an alternative configuration of fire seal in the form of a lip seal 14. Lip seal 14 is similar in configuration to the seal 22 shown in Figures 3(a), 3(b) and 3(c), discussed below.

An example of such a fire seal in use is shown in Figures 3(a), 3(b) and 3(c). Here, there is shown an aircraft engine pylon 21 on which is mounted an annular engine splitter fire seal 22 according to the invention. The fire seal 22 is manufactured according to the principles explained with reference to Figures 2(a) and 2(b), although the details of the different layers are not shown. In use, curved portion 23 of the seal 22 bears against engine component 24 and creates a fire break.

Referring now to Figure 4, there is shown a graph representing a signal sent to and received from a fire sensor according to the invention. The graph plots Sensing Fabric Length or Width against Normalized Change in Electrical Resistance. The lower trace, labelled "Normal signal", represents a test signal sent and received from multiple fibres across the fabric length or width. The fire sensor may be a thermal insulation blanket or a fire seal.

The upper trace, labelled "Fire detecting signal", represents a test signal sent to the same fabric. The shift in signal, as shown in the upper trace, indicates where the fire has been detected in that fabric. It will be seen that the upper trace is virtually identical with the lower trace until the 'fire detected' part of the signal, encircled, takes over. As the graph plots distance along or across the fabric, it is possible to determine where in the fabric the fire is detected.

In practice, the test signal received from the fibre can also be compared with a stored signal for that fibre or a similar fibre. Any difference above a given threshold can be used to determine the existence of a fire in the fibre or the presence of some other anomaly, such as a break in the fibre. This system may be used for continuous monitoring of fibres/fabric and also for calibration of the apparatus.

A similar comparison can be made between test signals sent to adjacent fabrics/ fire blankets in order to determine whether a detected fire has spread to the adjoining fabric as well.

Turning now to Figure 7, this shows, schematically, sensor connections on a microchip used to indicate presence or absence of a flame on the fire sensor. Each of the 100 diagrams in the grid represents a test signal received from a single fibre of a fire sensor according to the invention. The fibres represented show identical test signals received save for those encircled which show no signal or a modified signal, according to the specific design of the apparatus or system. The locations of those fibres with no signal or a modified signal will indicate where a fire exists in the fabric.

By this means, the fire sensor, fire sensing apparatus and fire sensing system of the invention can detect where a fire is located on a single fabric or on a series of fabrics on an aircraft. In addition, flame propagation either travelling through various fibre intersections 6 (see Figure 8) or from one fabric to the next can be detected, according to the invention.

Figure 5 shows schematically a fire sensing system according to the invention in use for active fire control. Central to the system is a controller 11 of which further detail appears in Figure 6. The controller 11 is connected to a fire seal 13 and fire extinguishers 25, distributed throughout the aircraft in order selectively to extinguish flames wherever detected by the fire sensors, according to the invention. In addition, the controller 11 is connected to a crew warning system 26, an engine fire control system 27, an aircraft fire control system 28 and an aircraft flight management system 29. In operation, when a fire is detected by the controller 11 in a fire sensor such as the fire seal 13, it communicates with the flight management system 29, the aircraft fire control system 28, the engine fire control system 27 and an aircraft air system (not shown) to give and receive information relating to the general state of the aircraft and to the fire(s) detected. The controller 11 then selectively activates the appropriate number of fire extinguishers 25 to dowse the fire. Extinguishing is stopped once the fire sensors no longer indicate the presence of a fire to the controller 11. In addition, the controller sends a continuously updating alert to the crew 26 as to the current state of the fire(s).

Figure 6 shows detail of the decision-making used in the controller 11 when a fire is detected in one of the fire blankets 1.

The embodiments described herein are respective non-limiting examples of how the present invention and aspects of the present invention may be implemented. Any feature described in relation to any one embodiment may be used alone, or in combination with other features described, and may also be used in combination with one or more features of any other of the embodiments, or any combination of any other of the embodiments. Furthermore, modifications not described above may also be employed without departing from the scope of the invention, which is defined by the accompanying claims.

The word "or" as used herein is to be taken to mean "and/or" unless explicitly stated otherwise.

## Claims

1. A fire sensor including a layer (2) of fibres (4, 5), said fibres having an electromagnetic property changeable upon contact with fire and being individually connectible to detection means (11) to detect any said change in electromagnetic property, said fibres (4, 5) being arranged to cross one another at intersections (6), whereby a said change in electromagnetic property detected at each of two intersecting fibres (4,5) is indicative of a fire at the location of the intersection (6) of said two fibres (4, 5).

2. A fire sensor according to claim 1, in which the fibres (4, 5, 18, 19) comprise a non-conductive core material doped in a conducting agent.

3. A fire sensor according to claim 2, in which the conducting agent comprises a nano material.

4. A fire sensor according to claim 3, in which the nano material comprises a graphene-based doping agent.

5. A fire sensor according to any of claims 2 to 5, in which the core material is non-flammable.

6. A fire sensor according to any preceding claim, including a substrate (15, 16, 17) to which the fibres (4, 5, 18, 19) are attached.

7. A fire sensor according to claim 6, in which the substrate comprises a thermal insulation blanket (1).

8. A fire sensor according to claim 6, in which the substrate comprises a fire seal (13).

9. Fire sensing apparatus including a fire sensor (13) according to any preceding claim and detection means (11), said detection means including transmission means to send a test signal to a first end (7, 8) of each fibre (4, 5) of the fire sensor, receiving means to receive the test signal from a second end (9, 10) of each fibre (4, 5) and analysing means (11) to analyse the received signal and thereby detect any change in electromagnetic property of each fibre (4, 5).

10. Fire sensing apparatus according to claim 9, in which the analyzing means (11) is adapted to detect any change in electromagnetic property of each fibre (4, 5) by comparing a said received test signal with a stored test signal corresponding to an unburnt fibre and then indicating a fire if said test signal varies from said stored signal in a predetermined manner.

11. Fire sensing apparatus according to claim 9 or 10, including display means (26) to display the location of a detected fire.

12. An aircraft fire alarm system including fire sensing apparatus (11, 13) according to claim 9, 10 or 11 and an alarm (26).

13. An aircraft fire alarm system according to claim 12, including fire extinguishing means (25).

14. An aircraft including fire sensing apparatus according to any of claims 9 to 11.

15. An aircraft including a fire alarm system according to claim 12 or 13.

## Patentansprüche

1. Brandsensor, der eine Schicht (2) von Fasern (4, 5) einschließt, wobei die Fasern eine elektromagnetische Eigenschaft aufweisen, die bei Kontakt mit Feuer veränderbar ist und individuell mit Detektierungsmitteln (11) verbindbar ist, um jegliche derartige Änderung in der elektromagnetischen Eigenschaft zu detektieren, wobei die Fasern (4, 5) so angeordnet sind, dass sie einander an Schnittpunkten (6) schneiden, wobei eine solche Änderung der elektromagnetischen Eigenschaft, die an jeder der beiden sich schneidenden Fasern (4, 5) detektiert wird, ein Feuer an der Position des Schnittpunkts (6) der beiden Fasern (4, 5) angibt.

2. Brandsensor nach Anspruch 1, wobei die Fasern (4, 5, 18, 19) ein nicht-leitfähiges Kernmaterial umfassen, das mit einem Leitfähigkeitsmittel dotiert ist.

3. Brandsensor nach Anspruch 2, wobei das Leitfähigkeitsmittel ein Nanomaterial umfasst.

4. Brandsensor nach Anspruch 3, wobei das Nanomaterial ein Dotiermittel auf Graphenbasis umfasst.

5. Brandsensor nach einem der Ansprüche 2 bis 5, wobei das Kernmaterial nicht-entflammbar ist.

6. Brandsensor nach einem der vorhergehenden Ansprüche, der ein Substrat (15, 16, 17) einschließt, an dem die Fasern (4, 5, 18, 19) befestigt sind.

7. Brandsensor nach Anspruch 6, wobei das Substrat eine Wärmeisolationsabdeckung (1) umfasst.

8. Brandsensor nach Anspruch 6, wobei das Substrat ein Branddamm (13) ist.

9. Brandabfühlvorrichtung, die einen Brandsensor (13) gemäß einem der vorhergehenden Ansprüche und Detektierungsmittel (11) einschließt, wobei das Detektierungsmittel Sendemittel, um ein Testsignal an ein erstes Ende (7, 8) jeder Faser (4, 5) des Brandsensors zu senden, Empfangsmittel, um das Testsignal an einem zweiten Ende (9, 10) jeder Faser (4, 5) zu empfangen, und Analysiermittel (11) umfasst, um das empfangene Signal zu analysieren und dadurch jegliche Änderung in der elektromagnetischen Eigenschaft jeder Faser (4, 5) zu detektieren.

10. Brandabfühlvorrichtung nach Anspruch 9, wobei das Analysiermittel (11) vorgesehen ist, um jegliche Änderung in der elektromagnetischen Eigenschaft jeder Faser (4, 5) zu detektieren, indem ein solches empfangenes Testsignal mit einem gespeicherten Testsignal verglichen wird, das einer unverbrannten Faser entspricht, und dann ein Brand angezeigt wird, falls das Testsignal von dem gespeicherten Signal in einer vorbestimmten Weise abweicht.

11. Brandabfühlvorrichtung nach Anspruch 9 oder 10, die Anzeigemittel (26) einschließt, um den Ort eines detektierten Feuers anzuzeigen.

12. Brandalarmsystem für Luftfahrzeuge, das eine Brandabfühlvorrichtung (11, 13) gemäß Anspruch 9, 10 oder 11 und einen Alarm (26) einschließt.

13. Brandalarmsystem für Luftfahrzeuge nach Anspruch 12, das Feuerlöschmittel (25) einschließt.

14. Luftfahrzeug, das die Brandabfühlvorrichtung nach einem der Ansprüche 9 bis 11 einschließt.

15. Luftfahrzeug, welches das Brandalarmsystem gemäß Anspruch 12 oder 13 einschließt.

## Revendications

1. Détecteur d'incendie comprenant une couche (2) de fibres (4, 5), lesdites fibres ayant une propriété électromagnétique pouvant changer lors d'un contact avec un incendie et pouvant être raccordées individuellement à des moyens de détection (11) pour détecter tout dit changement de propriété électromagnétique, lesdites fibres (4, 5) étant conçues pour se croiser les unes les autres au niveau d'intersections (6), moyennant quoi un dit changement de propriété électromagnétique détecté au niveau de chacune de deux fibres se croisant (4, 5) est révélateur d'un incendie à l'emplacement de l'intersection (6) desdites deux fibres (4, 5).

2. Capteur d'incendie selon la revendication 1, dans lequel les fibres (4, 5, 18, 19) comprennent un matériau central non conducteur dopé dans un agent conducteur.

3. Capteur d'incendie selon la revendication 2, dans lequel l'agent conducteur comprend un nanomatériau.

4. Capteur d'incendie selon la revendication 3, dans lequel le nanomatériau comprend un agent dopant à base de graphène.

5. Capteur d'incendie selon l'une quelconque des revendications 2 à 5, dans lequel le matériau central est ininflammable.

6. Capteur d'incendie selon l'une quelconque des revendications précédentes, comprenant un substrat (15, 16, 17) auquel les fibres (4, 5, 18, 19) sont attachées.

7. Capteur d'incendie selon la revendication 6, dans lequel le substrat comprend une couverture d'isolation thermique (1).

8. Capteur d'incendie selon la revendication 6, dans lequel le substrat comprend un joint ignifuge (13).

9. Appareil de détection d'incendie comprenant un capteur d'incendie (13) selon l'une quelconque des revendications précédentes et des moyens de détection (11), lesdits moyens de détection comprenant des moyens d'émission pour envoyer un signal de test à une première extrémité (7, 8) de chaque fibre (4, 5) du capteur d'incendie, des moyens de réception pour recevoir le signal de test en provenance d'une seconde extrémité (9, 10) de chaque fibre (4, 5) et des moyens d'analyse (11) pour analyser le signal reçu et de ce fait détecter tout changement de propriété électromagnétique de chaque fibre (4, 5).

10. Appareil de détection d'incendie selon la revendication 9, dans lequel les moyens d'analyse (11) sont conçus pour détecter tout changement de propriété électromagnétique de chaque fibre (4, 5) en comparant un dit signal de test reçu avec un signal de test mémorisé correspondant à une fibre non brûlée puis en indiquant un incendie si ledit signal de test varie dudit signal mémorisé d'une manière prédéfinie.

11. Appareil de détection d'incendie selon la revendication 9 ou 10, comprenant des moyens d'affichage (26) pour afficher l'emplacement d'un incendie détecté.

12. Système d'alarme à incendie d'aéronef comprenant un appareil de détection d'incendie (11, 13) selon les revendications 9, 10 ou 11 et une alarme (26).

13. Système d'alarme à incendie d'aéronef selon la revendication 12, comprenant des moyens d'extinction d'incendie (25).

14. Aéronef comprenant un appareil de détection d'incendie selon l'une quelconque des revendications 9 à 11.

15. Aéronef comprenant un système d'alarme à incendie selon la revendication 12 ou 13.
